# EUROPEAN PATENT APPLICATION

(11) **EP 2 720 445 A1**
(43) Date of publication of application: **16.04.2014**
(21) Application number: 12195911.8
(22) Date of filing: 06.12.2012
(51) Int. Cl.: H04M 1/67

(54) **Electronic device with proximity sensing**

(30) Priority: 10.10.2012 US 201213648476
(71) Applicant: BlackBerry Limited, Waterloo, ON N2K 0A7 (CA)
(72) Inventor: Rojas, Brian Francisco, Rolling Meadows, IL Illinois 60008 (US); Janninck, Mark Daniel, Glen Ellyn, IL Illinois 60137 (US); Szczypinski, David Kazmierz, Kirkland, WA Washington 98034 (US)
(74) Representative: Patel, Binesh

(57) **Abstract**

Apparatus and methods (600, 700, 800) for sensing proximity of an object (22) to an electronic device (10) are disclosed. The apparatus may comprise an infrared source (30) configured to emit electromagnetic energy in the infrared frequency range (IR energy 24) for reflection by an object (22) in proximity to the electronic device (10). The apparatus may also comprise an image sensor (32) configured to: capture digital images in the visible light spectrum; detect the reflected IR energy (26); and generate a signal useful in controlling a function of the electronic device (10), such as the activation of a touch-sensitive display (14), based on the reflected IR energy (26) detected.

## Description

### TECHNICAL FIELD

The disclosure relates generally to electronic devices, and more particularly to the control of such devices based on proximity sensing.

### BACKGROUND

Some personal electronic devices such as smart phones with touch-sensitive displays also comprise ambient light and proximity sensors that are useful in the control and operation of such devices. However, ambient light and proximity sensing is typically done using dedicated sensors and associated circuitry which can result in increased part count, cost, size and complexity of such personal electronic devices.

Improvement is therefore desirable.

### BRIEF DESCRIPTION OF THE DRAWINGS

### Reference is now made to the accompanying drawings, in which:

FIG. 1 schematically shows a front view of an electronic device;

FIG. 2 schematically shows a side elevation view of the electronic device of FIG. 1 in proximity to an object;

FIG. 3 schematically shows a camera assembly comprised in the electronic device of FIG. 1;

FIG. 4A schematically shows a portion of an image sensor configured to capture digital images in the visible light spectrum and also detect infrared energy;

FIG. 4B schematically shows a portion of an image sensor configured to capture digital images in the visible light spectrum, detect infrared energy and detect ambient light;

FIG. 5 schematically shows various components comprised in the electronic device of FIG. 1;

FIG. 6 shows a flowchart illustrating a method that can be performed by the electronic device of FIG. 1;

FIG. 7 shows a flowchart illustrating another method that can be performed by the electronic device of FIG. 1; and

FIG. 8 shows a flowchart illustrating a further method that can be performed by the electronic device of FIG. 1.

### DETAILED DESCRIPTION

Aspects of various embodiments of the disclosure are described through reference to the drawings.

The disclosure describes devices, components and methods relating to electronic devices.

In various aspects, for example, the disclosure describes electronic devices comprising image sensors configured to capture digital images in the visible light spectrum and also detect electromagnetic energy in the infrared frequency range (IR energy). The detection of the IR energy by the image sensors may be used to control at least one function of such electronic devices such as, for example, the activation of one or more displays which may or may not be touch-sensitive.

Thus, in one aspect, the disclosure describes an electronic device. The electronic device may comprise: a housing; a processor coupled to a memory and housed within the housing; an infrared source coupled to the processor and configured to emit electromagnetic energy in the infrared frequency range (IR energy) for reflection against an object in proximity to the housing; and an image sensor coupled to the processor and configured to: detect images in the visible light spectrum; detect the reflected IR energy; and generate a signal for controlling a function of the electronic device based on the reflected IR energy detected.

In another aspect, the disclosure describes an apparatus for sensing proximity of an object to an electronic device. The apparatus may comprise: an infrared source configured to emit electromagnetic energy in the infrared frequency range (IR energy) for reflection by an object in proximity to the electronic device; and an image sensor configured to: capture digital images in the visible light spectrum; detect the reflected IR energy; and generate a signal useful in controlling a function of the electronic device based on the reflected IR energy detected. The apparatus may comprise circuitry configured to disable at least a portion of a touch-sensitive display of the electronic device in response to the reflected IR energy detected by the image sensor exceeding a predetermined amount. For example, exceeding the predetermined amount of IR energy may be representative of a head of a user being in proximity to the electronic device. The image sensor may be configured to detect an ambient light condition and the circuitry may be configured to adjust backlighting of the touch-sensitive display based on the level of ambient light detected by the image sensor. For example, the image sensor may comprise an active pixel sensor comprising at least one pixel configured to detect the IR energy.

In a further aspect, the disclosure describes a method in an electronic device for sensing proximity of an object to the electronic device using electromagnetic energy in the infrared frequency range (IR energy) and an image sensor configured to receive images in the visible light spectrum. The method may comprise: emitting IR energy for reflection against an object in proximity to the electronic device; and using the image sensor, detecting the reflected IR energy and generating a signal for controlling a function of the electronic device based on the reflected IR energy detected.

For example, in various embodiments the image sensor may be further configured to detect an ambient lighting condition and generate one or more signals useful in controlling the backlighting of at least one display on the electronic device.

Further details of these and other aspects of the subject matter of this application will be apparent from the drawings and the description included below.

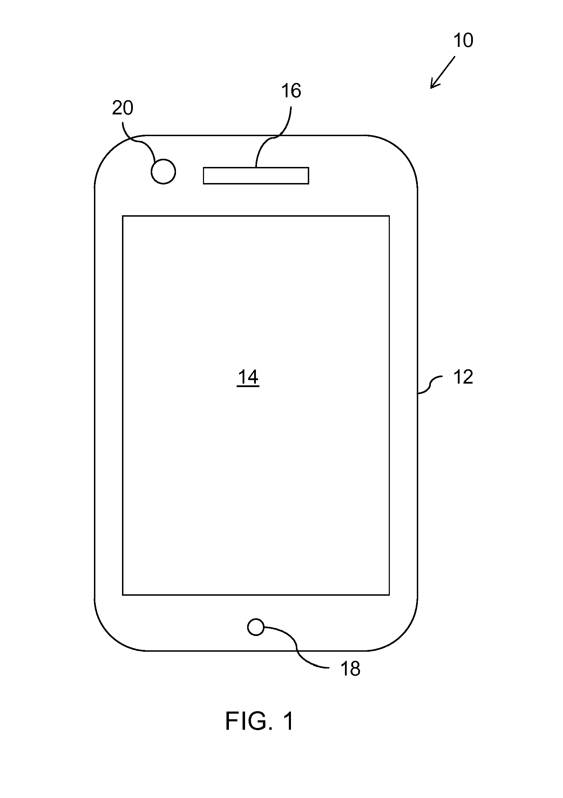

FIG. 1 shows an exemplary portable electronic device 10 (referred to hereinafter as electronic device 10) in which example embodiments of teachings of the present disclosure may be applied. Electronic device 10 may have wireless communication capabilities but the teachings of the present disclosure may also be applied to devices without wireless communication capabilities. Examples of electronic device 10 may include, but are not limited to, a mobile phone, smartphone or superphone, tablet computer, notebook computer (also known as a laptop, netbook or ultrabook computer depending on the device capabilities), wireless organizer, personal digital assistant (PDA), electronic gaming device, and special purpose digital camera, which may be capable of both still image and video image capture.

Electronic device 10 may include housing 12 for containing various components/circuitry described further below. For example, electronic device 10 may include one or more displays 14, hereinafter referred to in the singular. Display 14 may include one or more areas in which a graphic user interface (GUI) can be displayed. At least a portion of display 14 may be touch-sensitive to permit electronic device 10 to receive user input via interaction with the GUI shown on display 14. The GUI may, for example, include information such as text, characters, symbols, images, icons, and other items rendered on display 14 where interaction with the GUI may be used to perform various functions/tasks with electronic device 10. For example, display 14 may include a capacitive touch-sensitive display including a capacitive touch-sensitive overlay or may include any other suitable touch-sensitive display, such as a resistive, infrared, surface acoustic wave (SAW) touch-sensitive display, optical imaging, dispersive signal technology and acoustic pulse recognition.

Electronic device 10 may include telephone capabilities and accordingly may include one or more speakers 16, one or more microphones 18 and associated circuitry permitting wireless communication via cellular network for example. Electronic device 10 may also include camera assembly or assemblies 20, hereinafter referred to in the singular, configured for one or both of still image and video image capture in the visible light (VL) spectrum. Electronic device 10 may also include other components/circuitry for performing other functions/tasks.

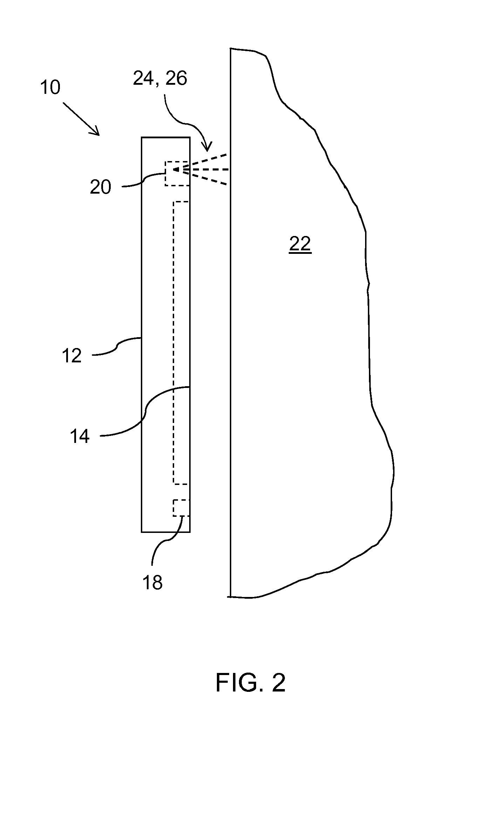

FIGS. 1 and 2 show that camera assembly 20 and touch-sensitive display 14 may be disposed on a same side of housing 12 and may, for example, permit a user to use camera assembly 20 for self-portrait and video conferencing. Speaker 16 and microphone 18 may also be disposed on the same side of housing 12 as touch-sensitive display(s) 14. Accordingly, to prevent inadvertent actuations by a user's face/head when the user is participating in a telephone call (i.e., listening at speaker 16 while speaking into microphone 18), electronic device 10 may comprise proximity sensing functionality that may be used to disable at least a portion of touch-sensitive display 14 when one or more objects 22 is/are in proximity to (e.g. in contact with) housing 12 of electronic device 10.

Touch-sensitive display 14 may also be susceptible to inadvertent actuations when electronic device 10 is disposed in a user's pocket. Accordingly, object 22 may include a user's head, face, leg or any other part of a user's body or clothing that could potentially cause inadvertent actuations of touch-sensitive display 14. Alternatively, object 22 may include something other than a user's body such as, for example, any surface against which electronic device 10 may be resting and which could potentially cause inadvertent actuation of touch-sensitive display 14. The disabling of touch-sensitive display 14 may include placing the touch-sensitive display 14 in a state where electronic device 10 no longer accepts inputs via at least a portion of touch-sensitive display 14.

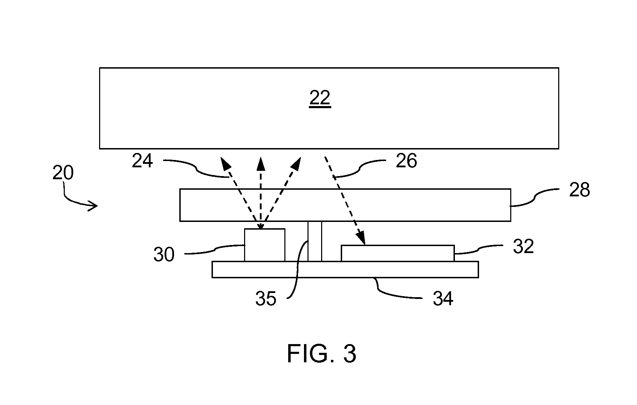

FIG. 2 shows electronic device 10 being disposed in close proximity to object 22. As explained further below, in addition to having the capability to capture images in the visible light spectrum, camera assembly 20 may also have the capability to detect proximity of object 22 to electronic device 10. For example, camera assembly 20 may comprise a source (such as item 30 in FIG. 3) configured to emit electromagnetic energy in the infrared range (referred to hereinafter as IR energy) for reflection against object 22 and detect IR energy 26 reflected by object 22. Based on the IR energy detected, camera assembly 20 may then generate one or more signals useful in controlling one or more functions of electronic device 10. For example, in the event where the IR energy detected exceeds a predetermined amount, camera assembly 20 may then generate one or more signals that may be indicative that at least a portion of touch-sensitive display 14 should be disabled.

FIG. 3 schematically shows an exemplary embodiment of camera assembly 20. Camera assembly 20 may comprise one or more lenses 28, one or more sources 30 of IR energy (referred to hereinafter as IR source 30) and one or more image sensors 32 adapted to capture digital images in the visible light spectrum. IR source 30 and image sensor 32 may be disposed behind lens 28 and mounted to structure 34 supported in housing 12 (not shown in FIG. 3). Structure 34 may, for example, include a printed circuit board to which other components may also be mounted. Accordingly, lens 28 may permit transmission of at least a portion of IR energy 24 emitted by IR source 30 and of IR energy 26 reflected by object 22.

One or more light separators 35 may be disposed between IR source 30 and sensor 32 depending on the configuration and relative placement of IR source 30 and sensor 32. Light separator 35 may be configured to substantially prevent IR energy 24 from bouncing off of lens 22 and being re-directed towards sensor 32. Light separator 35 may comprise one or more materials substantially impermeable to IR energy 24 and may, for example, include a suitable barrier extending between structure 34 and lens 22.

While FIG. 3 shows IR source 30 as being part of camera assembly 20, it is understood that IR source 30 does not necessarily have to be part of camera assembly 20. For example, IR source 30 could instead or additionally be disposed outside of camera assembly 20 at another location on housing 12 and consequently may not necessarily be disposed behind the same lens 28 as image sensor 32.

IR source 30 may include one or more suitable emitters of IR energy. For example, IR source 30 may include one or more light emitting diodes (LEDs) that can emit IR energy in a particular direction. For example IR source 30 may be configured to emit IR energy in an outward direction from housing 12 and image sensor 32 may be configured to capture digital images in the visible light spectrum by detecting light arriving along substantially the same path but travelling in an inward direction from housing 12. Display 14 may also be facing substantially the same outward direction from housing 12 as shown in FIGS 1 and 2.

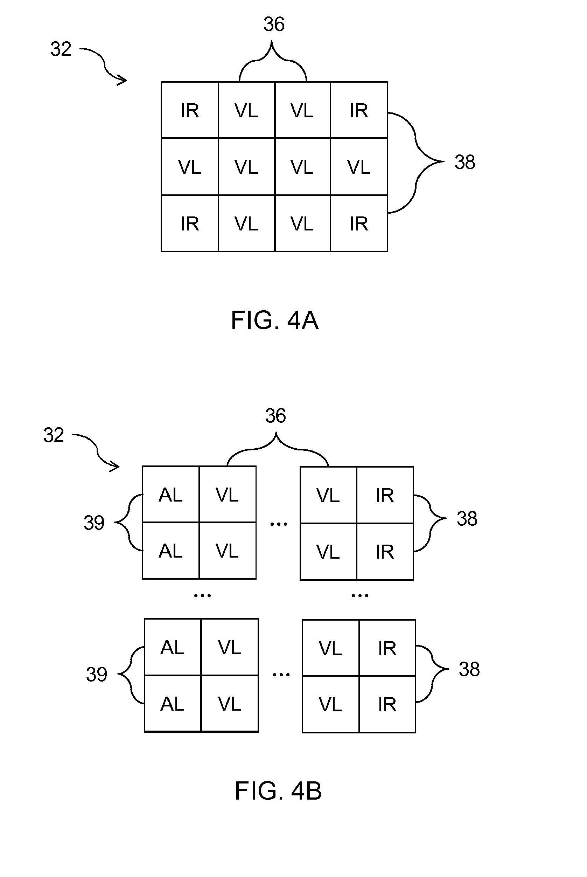

FIG. 4A shows an exemplary schematic representation of a portion of image sensor 32. For example, image sensor 32 may comprise a charge-coupled device (CCD) sensor or an active pixel sensor (APS) such as a complementary metal-oxide semiconductor (CMOS) sensor or another suitable type of image sensor. Image sensor 32 may be configured to capture digital images in the visible light spectrum and may additionally be configured to detect IR energy 26 being reflected by object 22. Accordingly, image sensor 32 may comprise an array of detecting elements (e.g. pixels) including one or more detecting elements that are sensitive to visible light (referred to hereinafter as VL pixels 36) and one or more detecting elements (e.g. pixels) that are sensitive to IR energy (referred to hereinafter as IR pixels 38). The arrangement and proportion of VL pixels 36 and IR pixels 38 may vary depending on the specific application and may depend on factors such as the resolution of VL images required from image sensor 32, the type of sensor, and the intensity of the IR energy to be detected. In some applications, it may be desirable to have fewer IR pixels 38 than VL pixels 36. In some embodiments, IR pixels 38 may be substantially evenly distributed across an area of image sensor 32 or, alternatively, may be disposed in one or more dedicated areas of image sensor 32. For example, image sensor 32 may comprise one or more rows or columns dedicated to IR pixels 38. The array of detecting elements including IR pixels 38 and VL pixels 36 may be integrated into a single semiconductor chip.

Image sensor 32 may be further configured to detect an ambient light condition around electronic device 10. Accordingly, VL pixels 36 shown in FIG. 4 could also be used to detect an ambient light condition. Based on the ambient light condition, image sensors 32 may generate one or more signals useful in controlling at least one function of electronic device 10. For example, such signals may be representative of the ambient light condition and could be used as a basis for adjust backlighting (e.g. brightness) of display 14.

FIG. 4B shows an another exemplary schematic representation of a portion (i.e. four corner portions) of image sensor 32 where image sensor 32 may comprise one or more VL pixels 36, one or more IR pixels 38 and one or more detecting elements that are sensitive to an ambient light condition (referred to hereinafter as AL pixels 39). Here, instead of or in addition to using VL pixels 36 to detect the ambient light condition, dedicated AL pixels 39 could be used to detect the ambient light condition. For example, AL pixels 39 may be configured to detect green light (i.e. a green pixel sensor) so that the measured ambient light level may correspond to light for which the human eye has great sensitivity. In some embodiments, IR pixels 38 and AL pixels 39 may be substantially evenly distributed across an area of image sensor 32 or, alternatively, may be disposed in one or more dedicated areas of image sensor 32. For example, image sensor 32 may comprise one or more rows or columns dedicated to IR pixels 38 and one or more rows or columns dedicated to AL pixels 39 and the remainder of the rows/columns may be dedicated to VL pixels 36 for image capture. The array of detecting elements including VL pixels 36, IR pixels 38 and AL pixels 39 may be integrated into a single semiconductor chip.

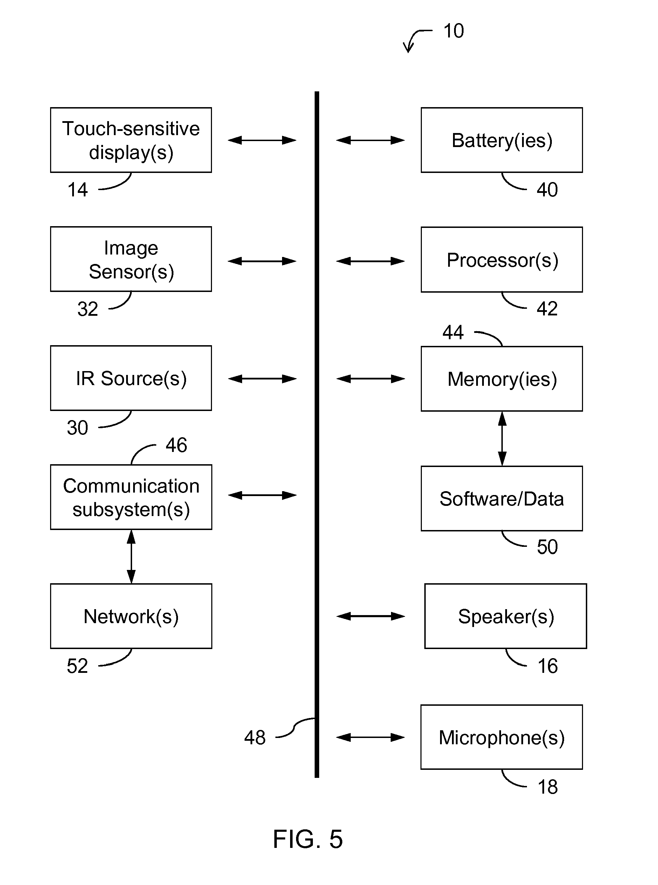

FIG. 5 shows an exemplary schematic and non-exhaustive representation of various components (e.g. circuitry) that may be incorporated in electronic device 10. In addition to the components described above, electronic device 10 may further comprise one or more batteries 40, one or more processors 42, at least one memory 44, one or more communication subsystems 46 and at least one bus 48, which may include a data bus and a power bus. The various components may be mounted to one or more printed circuit boards.

Battery 40 may serve as a power source for at least some of the electrical circuitry including processor 42, memory 44, camera assembly 20 and other components of electronic device 10 via bus 48. Battery 40 may include one or more rechargeable batteries.

Processor 42 may include one or more microprocessors or other suitably programmed or programmable logic circuits controlling at least some of the functionality of electronic device 10 including some of the functionality of camera assembly 20 and other components. As shown in FIG. 5, processor 42 may interacts with various components via bus 48.

Memory 44 may comprise any storage means (e.g. devices) suitable for retrievably storing machine-readable instructions executable by processor 42. The machine-readable instructions may include software/data 50. Memory 38 may be non-volatile. For example, memory 38 may include random access memory (RAM), read only memory (ROM), persistent (i.e. non-volatile) memory which may be flash erasable programmable read only memory (EPROM) memory ("flash memory") or any other suitable electromagnetic or optical media suitable for storing electronic data signals in volatile or non-volatile, non-transient form. Memory 38 may contain machine-readable instructions for execution by processor 42 that may cause processor 42 to control one or more functions of electronic device based on the reflected IR energy detected by the image sensor 32.

Communication functions, including data and voice communications, may be performed through communication subsystem 46. Communication subsystem 46 may receive messages from and send messages to wireless network 52. Wireless network 52 may, for example, include any suitable type of wireless network 52 such as a cellular network or a wireless local area network.

Electronic device 10 may also include other user input devices such as a keyboard, control buttons such as a power toggle (on/off) button (not shown), a camera button (not shown) for enabling a camera mode, an image-capture button (not shown) for enabling an image capture sequence. Such user-input devices may be provided on touch-sensitive display 14 instead of, or in addition to, physical interface components.

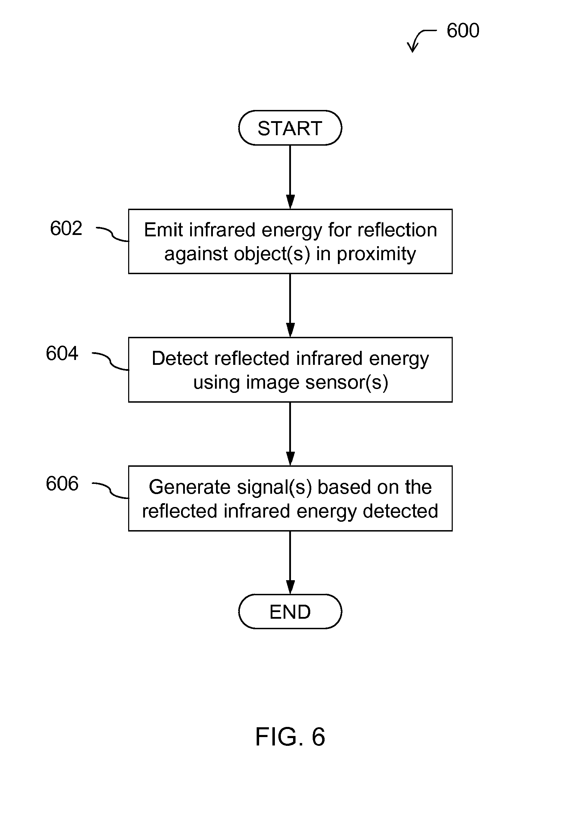

FIG. 6 contains a flowchart which illustrates an exemplary method 600 that may be conducted using electronic device 10. The execution of method 600 may be done according to machine-readable instructions stored in memory 44 and executable by processor 42. For example, such machine-readable instructions stored in memory 44, when executed by processor 42 may cause: IR source 30 to emit IR energy 24 for reflection against object 22 which may be in proximity to electronic device 10 (see block 602); image sensor 32 to detect the reflected IR energy 26 (see block 604); and image sensor 32 to generate one or more signals based on the reflected IR energy 26 detected (see block 606). The signals generated by image sensor 32 may be useful in controlling at least one function of electronic device 10. For example, such signals may be representative of object 22 being in proximity (e.g. in contact) to electronic device 10 and in response to such signals, processor 42 may cause at least a portion of touch-sensitive screen 14 to become disabled.

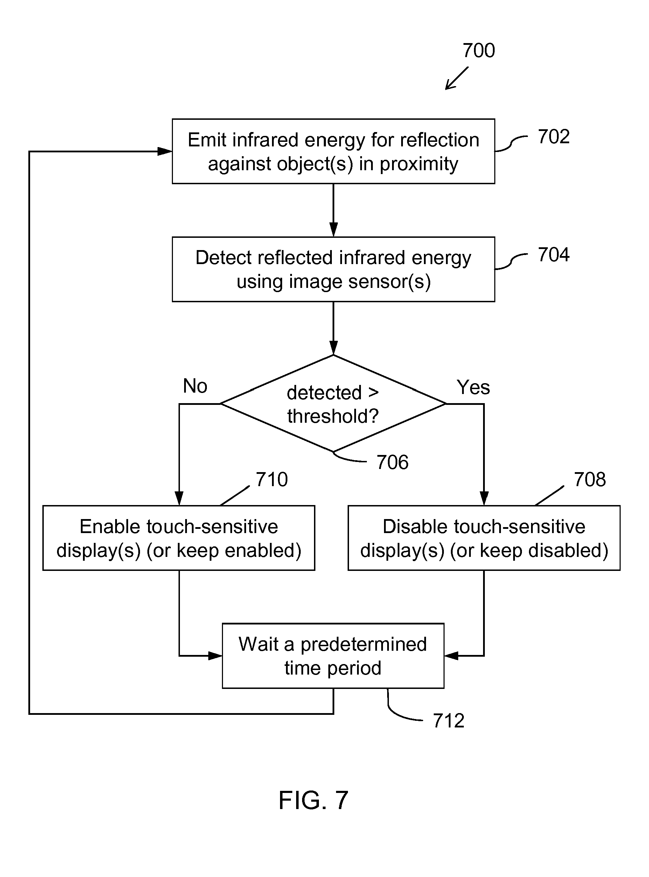

FIG. 7 contains a flowchart which illustrates another exemplary method 700 that may be conducted using electronic device 10. The execution of method 700 may be done according to machine-readable instructions stored in memory 44 and executable by processor 42. For example, such machine-readable instructions stored in memory 44, when executed by processor 42 may cause: IR source 30 to emit IR energy 24 for reflection against object 22 which may be in proximity to electronic device 10 (see block 702) and image sensor 32 to detect the reflected IR energy 26 (see block 704). Upon detection of the reflected IR energy 26, image sensor may generate signals based on the reflected IR energy 26 detected. Such signals may be representative of an amount of reflected IR energy 26 detected by image sensor 32. At block 706, the signals may be compared to one or more predetermined values (e.g. threshold) to determine whether such predetermined value(s) are exceeded. Depending on whether the amount of reflected IR energy 26 detected is greater than or less than the predetermined value(s), touch-sensitive display 14 may be enabled or disabled (see blocks 708 and 710). After blocks 708 or 710, method 700 may comprise a time delay permitting a predetermined period of time to expire before returning to block 702. Accordingly, method 700 may be performed continuously or intermittently by electronic device 10 during certain modes of operation such as during a telephone call for example.

Exceeding the predetermined value(s) may be representative of object 22 being in proximity to (e.g. in contact with) electronic device 10. The predetermined value(s) may be selected to be representative of object 22 being either in contact with or within a sufficiently small distance from electronic device 10 to cause a risk of inadvertent interaction with touch-sensitive display 14. For example, object 22 may be a head/face of a user in proximity to electronic device 10 when the user is participating in a telephone call and the user's ear is pressed against or is within a relatively small distance from speaker 16. In a case where electronic device 10 may be disposed in a user's pocket, object 22 may be a leg of the user or a portion of an article of clothing that is in contact with the electronic device 10. In any event, the predetermined values to be exceeded should be indicative of a risk of inadvertent interaction with touch-sensitive display 14 and should be selected such that normal interaction of a user's finger or hand with touch-sensitive display 14 does not cause touch-sensitive display 14 to become disabled.

Conditioned on the amount of reflected IR energy 26 detected by image sensor 32 exceeding the predetermined value (i.e. indicating a risk of inadvertent interaction with touch-sensitive display 14), touch-sensitive display 14 may be disabled. If touch-sensitive display 14 was already disabled then it may be kept in a disabled mode. Conditioned upon the amount of reflected IR energy 26 detected by image sensor 32 being less than the predetermined value (i.e. not indicating a risk of inadvertent interaction with touch-sensitive display 14), touch-sensitive display 14 may be enabled. If touch-sensitive display 14 was already enabled then it may be kept in a enabled mode. It is understood that there may be other conditions monitored within electronic device 10 that may control the activation of touch-sensitive display 14 and that the enabling or disabling of touch-sensitive display 14 in method 700 may or may not necessarily override the enabling or disabling of touch-sensitive display 14 independently controlled based on the other conditions.

Disablement of touch-sensitive display 14 may include partial or complete disablement. For example, partial disablement of touch-sensitive display 14 could include placing at least a portion of display 14 in a state where inputs via touch-sensitive display 14 are no longer accepted by electronic device 10 but display 14 can still show information. Complete disablement of touch-sensitive display 14 could include placing at least a portion of display 14 in a state where inputs via touch-sensitive display 14 are no longer accepted by electronic device 10 and information is no longer shown on display 14.

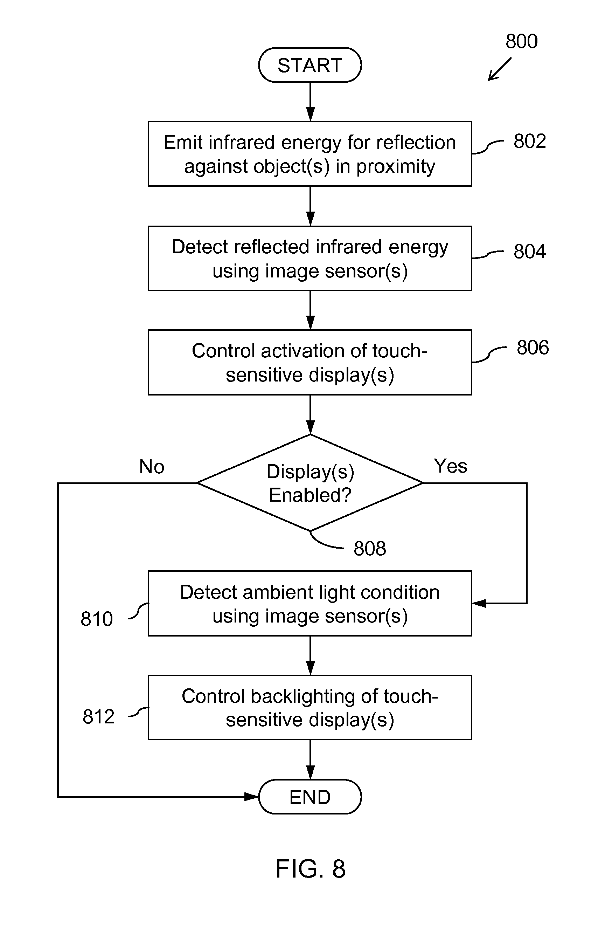

FIG. 8 contains a flowchart which illustrates another exemplary method 800 that may be conducted using electronic device 10. Again, the execution of method 800 may be done according to machine-readable instructions stored in memory 44 and executable by processor 42. As mentioned above, image sensor 32 may additionally be configured to detect an ambient light condition around electronic device 10. Accordingly, such detected ambient light condition may be used to adjust backlighting of touch-sensitive display 14. However, it is understood that the detection of the ambient light condition may be used to adjust backlighting of one or more display 14 that may or may not necessarily be touch-sensitive.

In accordance with method 800, machine-readable instructions stored in memory 44, when executed by processor 42 may cause: IR source 30 to emit IR energy 24 for reflection against object 22 which may be in proximity to electronic device 10 (see block 802); image sensor 32 to detect the reflected IR energy 26 (see block 804) and based on the reflected IR energy 26 detected by image sensor 32, control the activation of display 14 (see block 806). At block 804, the detection of reflected IR energy 26 using image sensor 32 may also include the image sensor 32 generating one or more signals representative of an amount of IR energy 26 detected. Such signals may be useful in controlling the activation of at least a portion of display 14.

Conditioned upon display 14 being enabled (see block 808), the machine-readable instructions, when executed by processor 42 may cause image sensor 32 to detect an ambient light condition (see block 810); and based on the ambient light condition detected, control backlighting of display 14 (see block 812). At block 810, the detection of an ambient condition using image sensor 32 may also include the image sensor 32 generating one or more signals representative of the ambient light condition detected. Such signals may be useful in controlling the backlighting (e.g. brightness) of display 14.

The disabling of display 14 in response to a sufficiently large amount of reflected IR energy 26 being detected by image sensor 32 may comprise placing display 14 in a state where inputs are no longer accepted by touching display 14 (i.e. partial disablement). In such state, display 14 may still be permitted to display information. Accordingly, the determination of whether display 14 is enabled at 808 may not be used since adjustment of backlighting display 14 could still be done even though inputs may no longer be accepted via touch-sensitive display 14. Alternatively, the disabling of display 14 could include the complete shut-down of display 14 such that inputs via touch-sensitive display 14 are no longer accepted by electronic device 10 and information is no longer shown on display 14 (i.e. complete disablement). In a case of complete disablement of display 14, it may not be necessary to adjust backlighting of display 14. Adjustment of the backlighting of display 14 may include increasing the brightness of display 14 in brighter ambient lighting conditions and decreasing the brightness of display 14 in darker ambient lighting conditions.

The above description is meant to be exemplary only, and one skilled in the relevant arts will recognize that changes may be made to the embodiments described without departing from the scope of the invention disclosed. For example, the blocks and/or operations in the flowcharts and drawings described herein are for purposes of example only. There may be many variations to these blocks and/or operations without departing from the teachings of the present disclosure. For instance, the blocks may be performed in a differing order, or blocks may be added, deleted, or modified. The present disclosure may be embodied in other specific forms without departing from the subject matter of the claims. The present disclosure is also intended to cover and embrace all suitable changes in technology. Modifications which fall within the scope of the present invention will be apparent to those skilled in the art, in light of a review of this disclosure, and such modifications are intended to fall within the appended claims.

## Claims

1. An electronic device (10), the electronic device (10) comprising:
a housing (12);
a processor (42) coupled to a memory (44) and housed within the housing (12);
an infrared source (30) coupled to the processor (42) and configured to emit electromagnetic energy in the infrared frequency range (IR energy) for reflection against an object (22) in proximity to the housing (42); and
an image sensor (32) coupled to the processor (42) and configured to: detect images in the visible light spectrum; detect the reflected IR energy; and generate a signal for controlling a function of the electronic device (10) based on the reflected IR energy detected.

2. The electronic device (10) as defined in claim 1, further comprising a display (14) coupled to the processor (42), the processor (42) configured to disable at least a portion of the display (14) when the IR energy detected by the image sensor (32) exceeds a predetermined amount.

3. The electronic device (10) as defined in claim 2, wherein the image sensor (32) is configured to detect an ambient light condition and the processor (42) is configured to adjust backlighting of the display (14) based on the ambient light condition detected by the image sensor (32).

4. The electronic device (10) as defined in any one of claims 2 and 3, wherein the infrared source (30) is configured to emit IR energy in an outward direction from the housing (12) and the display (14) faces the outward direction.

5. The electronic device (10) as defined in any one of claims 2 and 3, wherein exceeding the predetermined amount of IR energy is representative of a head of a user (22) being in proximity to the housing (12).

6. The electronic device (10) as defined in any one of claims 1 to 5, further comprising a touch-sensitive display (14) coupled to the processor (42), the processor (42) configured to place the touch-sensitive display (14) in a state where inputs via at least a portion of the touch-sensitive display (14) are no longer accepted when the IR energy detected by the image sensor (32) exceeds a predetermined amount.

7. The electronic device (10) as defined in any one of claims 1 to 6, wherein the image sensor (32) comprises an active pixel sensor (32) comprising at least one pixel (38) configured to detect the IR energy.

8. The electronic device (10) as defined in claim 1, wherein the image sensor (32) is configured to detect an ambient light condition.

9. The electronic device (10) as defined in claim 8, further comprising a display (14), the processor (42) configured to adjust backlighting of the display (14) based on the ambient light condition detected by the image sensor (32).

10. A method in an electronic device (10) for sensing proximity of an object (22) to the electronic device (10) using electromagnetic energy in the infrared frequency range (IR energy) and an image sensor (32) configured to receive images in the visible light spectrum, the method comprising:
emitting IR energy for reflection against the object (22) in proximity to the electronic device (10); and
using the image sensor (32), detecting the reflected IR energy and generating a signal for controlling a function of the electronic device (10) based on the reflected IR energy detected.

11. The method as defined in claim 10, comprising using the signal for controlling at least a portion of a display (14) of the electronic device (10).

12. The method as defined in claim 10, comprising using the signal to disable at least a portion of a display (14) of the electronic device (10) conditioned on the reflected IR energy detected by the image sensor (32) exceeding a predetermined amount.

13. The method as defined in claim 12, wherein exceeding the predetermined amount of IR energy is representative of a head of a user (22) being in proximity to the electronic device (10).

14. The method as defined in any one of claims 11 to 13, comprising using the image sensor (32) to detect an ambient light condition and adjusting backlighting of the display (14) of the electronic device (10) based on the ambient light condition detected by the image sensor (32).

15. The method as defined in claim 10, comprising using the signal to disable at least a portion of a touch-sensitive display (14) of the electronic device (10) conditioned on the reflected IR energy detected by the image sensor (32) exceeding a predetermined amount.
